# EUROPÄISCHE PATENTSCHRIFT

(11) **EP 2 529 161 B1**
(45) Veröffentlichungstag und Bekanntmachung des Hinweises auf die Patenterteilung: **16.03.2016**
(21) Anmeldenummer: 10788345.6
(22) Anmeldetag: 14.12.2010
(51) Int. Cl.: G05D 23/19, F24D 19/10

(54) **STEUEREINRICHTUNG FÜR EINE HEIZUNGSEINRICHTUNG UND SYSTEM ZUR STEUERUNG EINER HEIZUNGSANLAGE**
CONTROL DEVICE FOR A HEATING DEVICE, AND SYSTEM FOR CONTROLLING A HEATING INSTALLATION
DISPOSITIF DE COMMANDE POUR APPAREIL DE CHAUFFAGE ET SYSTÈME POUR COMMANDER UN APPAREIL DE CHAUFFAGE

(30) Priorität: 26.01.2010 DE 102010001199
(43) Veröffentlichungstag der Anmeldung: 05.12.2012
(73) Patentinhaber: Robert Bosch GmbH, 70442 Stuttgart (DE)
(72) Erfinder: SCHOEPF, Friedrich, 75447 Sternenfels-Diefenbach (DE); BRANDSTETTER, Markus, 74343 Sachsenheim (DE)
(86) Internationale Anmeldenummer: PCT/EP2010/069586
(87) Internationale Veröffentlichungsnummer: WO 2011/091905

(56) Entgegenhaltungen:
- EP-A2- 1 116 921
- GB-A- 2 452 345

## Beschreibung

### Stand der Technik

Die Erfindung betrifft eine Steuereinrichtung für eine Heizungseinrichtung nach dem Oberbegriff des Anspruchs 1.

Eine derartige bekannte Steuereinrichtung weist einen Thermostaten auf, der über eine Bedieneinheit mit einer Eingabetastatur die Anwahl verschiedener Heizprogramme bzw. die Einstellung von bestimmten Heizkörpertemperaturen zu bestimmten Tages- und Nachtzeiten ermöglicht. Hierbei wird der Thermostat von einer Energiequelle gespeist, welche üblicherweise als Batterie oder Akkumulator ausgebildet ist. Dadurch bedingt ist ein gewisser Wartungs- bzw. Pflegeaufwand erforderlich, um die Energiequelle stets geladen zu halten, damit die Steuereinrichtung jederzeit arbeitet.

Zur energieeffizienten Beheizung eines Gebäudes ist es insbesondere erforderlich, dass jeder Raum stets nur mit der gewünschten bzw. erforderlichen Temperatur beheizt ist, wobei diese Temperatur über die Tageszeit sowie z.B. den Verlauf der Tage variieren kann. So ist es zum Beispiel bei gewerblich genutzten Räumen in der Regel nicht erforderlich, diese am Wochenende zu beheizen. Bedeutende Energieeinsparungen lassen sich mit einer gezielten Temperaturregelung erzielen, bei denen die Räume eines Gebäudes im Rahmen eines Gesamtenergiemanagements betrachtet werden.

Weiterhin ist es aus einer Publikation des Fraunhofer Institutes vom 6. Februar 2009 bekannt, z.B. mittels der Temperaturdifferenz zwischen einem Körper und der Raumtemperatur einen Spannungswandler zu betreiben, der als Halbleiterbauelement ausgebildet ist. Dieses Halbleiterbauelement erzeugt dabei eine gewisse elektrische Energie, mit der beispielsweise eine Uhr oder ähnliches betrieben werden kann.

Das Dokument EP 1 116 921 A2 offenbart eine Steuereinrichtung gemäß dem Oberbegriff des Anspruchs 1.

### Offenbarung der Erfindung

Ausgehend von dem dargestellten Stand der Technik liegt der Erfindung die Aufgabe zugrunde, eine Steuereinrichtung für eine Heizungseinrichtung nach dem Oberbegriff des Anspruchs 1 derart weiterzubilden, dass eine optimale Regelung der Raumtemperatur erzielt werden kann, unabhängig von einem etwaigen Ladezustand einer Energiequelle. Dadurch lässt sich der Energiebedarf zur Beheizung eines Raumes verringern und der Bedienungskomfort erhöhen. Diese Aufgabe wird mit einer Steuereinrichtung für eine Heizungseinrichtung mit den Merkmalen des Anspruchs 1 gelöst. Der Erfindung liegt dabei die Idee zugrunde, eine Energiequelle zu verwenden, die beim Vorhandensein von Temperaturdifferenzen zwischen zwei Referenzstellen Energie erzeugt. Mit anderen Worten gesagt bedeutet dies, dass Wartungs- bzw. Pflegemaßnahmen für die Energiequelle nicht erforderlich sind, so dass die Steuereinrichtung stets zuverlässig in gewünschter Art und Weise arbeitet.

Vorteilhafte Weiterbildungen der erfindungsgemäßen Steuereinrichtung für eine Heizungseinrichtung sind in den Unteransprüchen angegeben.

In einer bevorzugten Ausführungsform der Erfindung ist es vorgesehen, dass die Energiequelle in dem Thermostaten integral angeordnet ist. Dadurch lässt sich ein kompakter Aufbau der Steuereinrichtung erzielen, bei dem keinerlei Verbindungen zwischen der Energiequelle und dem Thermostaten erforderlich sind, die gegebenenfalls ansonsten von einem Bediener oder von einem Fachmann vorgenommen werden müssten.

In einer bevorzugten Ausführungsform ist es dabei vorgesehen, dass die eine Referenzstelle mit der Umgebungstemperatur und die andere Referenzstelle mit einem Heizungsrohr zumindest mittelbar in Wirkverbindung angeordnet ist. Dies ermöglicht insbesondere die Möglichkeit, dass beim Einschalten eines Brennkessels zu Beginn einer Heizperiode ein Heizungsrohr, welches mit den Thermostaten in Wirkverbindung angeordnet ist, auf eine bestimmte erste Temperatur erwärmt wird, die über der Raumtemperatur liegt, in dem sich der Thermostat befindet. Dadurch wird es ermöglicht, dass die Energiequelle genügend Energie erzeugen kann, um zumindest Verbraucher zu betreiben, die relativ wenig Energie benötigen oder die gewonnene Energie beispielsweise an einen Energiespeicher abzugeben.

In der Erfindung ist die Energiequelle mit einem Energiezwischenspeicher verbunden. Dadurch stehen selbst bei relativ geringen Temperaturdifferenzen zwischen den beiden Referenzstellen, ein zumindest teilweise geladener Energiezwischenspeicher vorausgesetzt, genügend Energiereserven zur Verfügung, um beispielsweise einen Thermostaten mit einem elektromagnetisch verstellbaren Ventil zu betätigen.

In einer weiteren Ausgestaltung der Erfindung ist es vorgesehen, dass die Steuereinheit mit einer Ein-/Ausgabeeinheit zur manuellen Eingabe und optischen Darstellung von Werten verbunden ist. Dadurch lässt sich eine individuelle Einstellung vornehmen, die bedienerspezifische Wünsche oder Anforderungen erfüllt.

Eine weitere Ausgestaltung der Erfindung sieht vor, dass die Steuereinheit bidirektionale Datenübertragungsmittel zur Kommunikation mit zumindest einer zentralen Steuereinheit aufweist. Dadurch ergibt sich die Möglichkeit, ein Gesamtenergiemanagement z.B. für ein Gebäude auszubilden, welches insgesamt gesehen den geringstmöglichen Energiebedarf des Gebäudes ermöglicht. Insbesondere lässt sich dann beispielsweise auch der Aufwand zur Bedienung der einzelnen Steuereinrichtungen verringern, da die erforderlichen bzw. gewünschten Werte mittels der zentralen Steuereinheit generiert werden können.

Ganz besonders bevorzugt ist es hierbei, wenn die Datenübertragungsmittel drahtlos ausgebildet sind. Dadurch werden z.B. bei einer nachträglichen Installation erfindungsgemäßer Steuereinrichtungen in einem Gebäude keine zusätzlichen, mit einem relativ hohen Investitionsbedarf verbundenen Leitungen erforderlich. Darüber hinaus können die einzelnen Steuereinrichtungen damit sehr einfach ausgetauscht werden.

Um eine einfache Installation, insbesondere auch durch einen Endverbraucher zu ermöglichen, ist es weiterhin bevorzugt vorgesehen, dass der Thermostat einen Normanschluss zur manuellen Verbindung mit der Heizungseinrichtung aufweist.

Eine optimale Anpassung bzw. Regelung der Raumtemperatur wird ermöglicht, wenn der Thermostat einen Temperaturfühler für die Umgebungstemperatur aufweist, der mit der Steuereinheit verbunden ist. Dadurch lässt sich besonders einfach und zuverlässig eine von einem Bediener als angenehm empfundene Raumtemperatur regeln bzw. einstellen.

Die Erfindung umfasst auch ein System zur Steuerung einer Heizungseinrichtung mit einer zentralen Steuereinheit und wenigstens einer erfindungsgemäßen Steuereinrichtung.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine vereinfachte Blockdarstellung einer nicht erfindungsgemäßen Steuereinrichtung für eine Heizungseinrichtung und
- Fig. 2: ein Detail der Fig. 1 bei einer abgewandelten der Erfindung entsprechenden Ausführungsform, ebenfalls in einer symbolischen Darstellung.

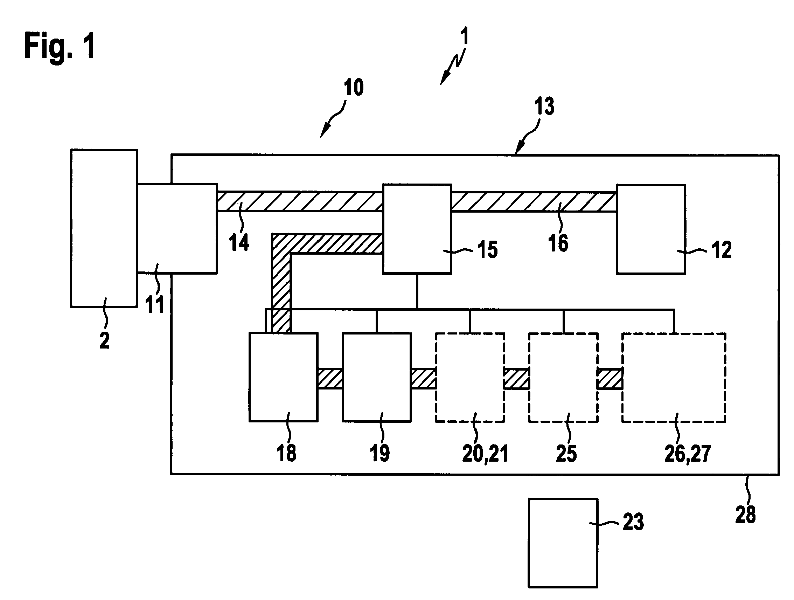

In der Fig. 1 ist eine Steuereinrichtung 10 für eine Heizungseinrichtung 1 dargestellt. Bei der Heizungseinrichtung 1 handelt es sich um eine Heizungseinrichtung 1, die insbesondere in einem Gebäude, beispielsweise einem Wohngebäude oder einem Geschäftsgebäude angeordnet ist und zur Temperierung bzw. Beheizung eines Raumes dient. Die Heizungseinrichtung 1 weist einen im näheren nicht dargestellten Heizkörper 2 auf, der in bekannter Art und Weise über Heizungsrohre mit einem Wärmeerzeuger, beispielsweise einem Brennkessel, verbunden ist. Der Heizkörper 2 hat einen standardisierten Ventilanschluß 11, über den ein Thermostat 13 mit dem Heizkörper 2 manuell verbunden werden kann, insbesondere auch durch einen Endverbraucher. Der Thermostat 13 weist einen ersten thermischen Leiter 14 auf, der mit einer Energiegewinnungseinheit 15 verbunden ist. Ein zweiter thermischer Leiter 16 ist mit den Thermostaten 13 derart verbunden, dass an dem der Energiegewinnungseinheit 15 abgewandten Ende des zweiten thermischen Leiters 16 an einem Thermostatkopf 12 in etwa die Raumtemperatur herrscht. Demgegenüber ist die erste thermische Leitung 14 derart mit dem Ventilanschluss 11 gekoppelt, dass an dem der Energiegewinnungseinheit 15 abgewandten Ende des ersten thermischen Leiters 14 die Temperatur herrscht, welche sich an dem Rohranschluss der Heizungsrohre für den Heizkörper 2 einstellt.

Die Energiegewinnungseinheit 15 ist von der Art, welche beim Vorhandensein von unterschiedlichen Temperaturen an zwei Referenzstellen zumindest eine geringe Menge Energie bereitstellt bzw. produziert. Beispielhaft kann es sich dabei um einen als Halbleiterbauteil ausgebildeten Spannungswandler handeln. Hierbei wirkt der erste thermische Leiter 14 als erste Referenzstelle, während der zweite thermische Leiter 16 als zweite Referenzstelle wirkt.

Die Energiegewinnungseinheit 15 ist mit einer Steuer- und Regeleinheit 18 verbunden. Die Steuer- und Regeleinheit 18 ist mit einem Stellmotor 19 gekoppelt, der zur elektromotorischen Verstellung des mechanischen Ventils des Thermostaten 13 und somit der Durchflussmenge von Energie an dem Heizkörper 2 dient.

Optional kann es vorgesehen sein, dass eine Datenübertragungseinheit 20, insbesondere in Form eines Funkmoduls 21 vorgesehen ist, welche von der Steuer- und Regeleinheit 18 erzeugte Ausgangswerte, die zum Beispiel auch der Ermittlung des Energiebedarfs des Heizkörpers 2 dienen, drahtlos an eine zentrale Steuereinheit 23 übermittelt. Selbstverständlich kann die zentrale Steuereinheit 23 wiederum auch Daten an die Steuereinrichtung 10 bzw. die Steuer- und Regeleinheit 18 übermitteln, um diese in bestimmter Art und Weise anzusteuern.

Weiterhin kann vorgesehen sein, dass die Steuereinrichtung 10 eine Ein-/Ausgabeeinheit 25 aufweist, die z.B. eine manuelle Dateneingabe mittels einer Tastatur durch einen Bediener ermöglicht und weiterhin eine Anzeigeeinheit z.B. in Form eines Displays aufweist, um eingegebene Werte zu überprüfen bzw. bestimmte Werte dem Bediener anzuzeigen. Zuletzt kann auch eine Messeinheit 26 vorgesehen sein, die insbesondere einen Temperaturfühler 27 umfasst. Mittels des Temperaturfühlers 27 wird die Raumtemperatur erfasst und der Steuer- und Regeleinheit 18 als Eingangswert zugeführt.

Insbesondere ist vorgesehen, dass die Steuer- und Regeleinheit 18, der Stellmotor 19, die Datenübertragungseinrichtung 20, die Ein-/Ausgabeeinheit 25 und die Messeinheit 26 integraler Bestandteil des Thermostaten 13 sind und somit innerhalb des gemeinsamen Gehäuses 28 des Thermostaten 13 angeordnet sind.

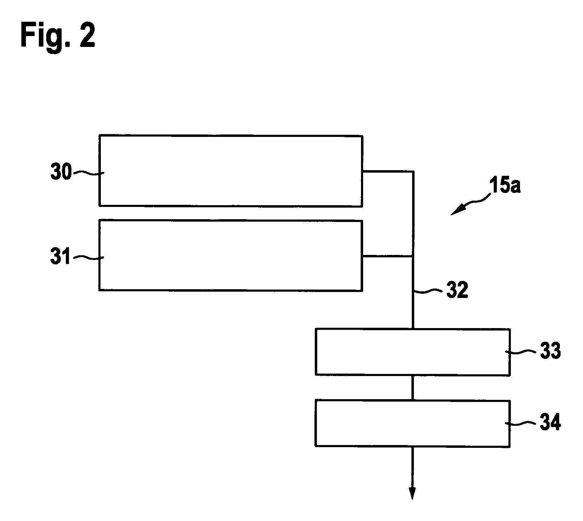

In der Fig. 2 ist eine Variante der Energiegewinnungseinheit 15 dargestellt. Hierbei weist die Energiegewinnungseinheit 15a ein erstes Modul 30 auf, welches der Energiegewinnung bei relativ niedrigen Temperaturdifferenzen dient. Ferner ist ein zweites Modul 31 vorgesehen, welches der Energiegewinnung bei relativ großen Temperaturdifferenzen dient. Beide Module 30, 31 sind über eine Leitung 32 mit einem Energiezwischenspeicher 33 bzw. einem Pufferakku verbunden, der mit einer Energiemanagementeinheit 34 gekoppelt ist.

Der Energiezwischenspeicher 33 dient der internen Abfederung von Spitzenlasten und der Einspeicherung von Energie nach dem Neustart der Heizungseinrichtung 1. Mittels der Energiemanagementeinheit 34, die ebenfalls Bestandteil der Steuereinrichtung 10 ist, werden die einzelnen, oben angesprochenen Einheiten bzw. Aggregate der Steuereinrichtung 10 in Abhängigkeit der verfügbaren Energiemenge gezielt bzw. in einer gewissen Reihenfolge angesteuert bzw. betrieben.

Die Steuereinrichtung 10 arbeitet wie folgt:
Nach längeren Betriebspausen bzw. zu Beginn der Heizperiode wird die Heizungsanlage des Gebäudes bzw. der Brennkessel eingeschaltet, worauf sich die Heizungsrohre zumindest bis in den Bereich des Ventilanschlusses 11 erwärmen. Diese Temperatur an dem Ventilanschluss 11 ist in der Regel um einige Grad wärmer als die in dem Raum herrschende Raumtemperatur. In Folge dessen werden von den beiden thermischen Leitern 14 und 16 unterschiedliche Temperaturen detektiert, welche mittels der Energiegewinnungseinheit 15 dazu benutzt werden, elektrische Energie zu erzeugen. Diese elektrische Energie wird entweder direkt dazu benutzt, um die Steuer- und Regeleinheit 18 zu betreiben, oder aber, über den Energiezwischenspeicher 33, um das Energiemanagementsystem 34 zu betreiben.

Sobald die Steuer- und Regeleinheit 18 genügend Energie zum Betrieb hat, kann diese beispielsweise den Stellmotor 19 antreiben, um damit den Heizkörper 2 in gewünschter Art und Weise zu regeln bzw. die in der Steuer- und Regeleinheit 18 vorhandenen Werte in eine entsprechende Stellung des Stellmotors 19 umzusetzen. Ferner kann mit der bereitgestellten Energie auch das Funkmodul 21 betrieben werden, welches die aktuellen eingestellten Daten in der Steuer- und Regeleinheit 18 sowie gegebenenfalls von der Messeinheit 26 erfasst Messwerte der zentralen Steuereinheit 23 übermittelt. Falls in der zentralen Steuereinheit 23 andere Werte abgelegt sind als in der Steuer- und Regeleinheit 18 werden diese anderen Werte nunmehr der Steuer- und Regeleinheit 18 als neue Eingangswerte zugeführt. Durch die bereitgestellte Energie der Energiegewinnungseinheit 15 steht darüber hinaus genügend Energie zur Verfügung, um die einzelnen Thermostate 13 in dem Gebäude zu lokalisieren bzw. diese bestimmten Räumen zuzuordnen. Dadurch wird auch eine einfache, automatisierte Installation der dezentralen Steuereinrichtungen 10 ermöglicht. Eine besonders einfache Steuerung wird hierbei gewährleistet, wenn in der zentralen Steuereinheit 23 Standardvorgaben für Regelungen angeboten werden können.

Durch die Messeinheit 26 mit dem Temperaturfühler 27 wird die Möglichkeit geschaffen, der zentralen Steuereinheit 23 die Heizkurve des Raumes zu übermitteln. Damit hat die zentrale Steuereinheit 23 die Möglichkeit, das Energiemanagement bzw. die Heizcharakteristik des Raumes und dessen Heizkurve so anzupassen, dass dies komfort- und energieoptional ist.

Die erfindungsgemäße Steuereinrichtung 10 kann in vielfältiger Art und Weise abgewandelt werden, ohne vom Schutzbereich der Patentansprüche abzuweichen. Dieser besteht in der Nutzung einer Energiegewinnungseinheit 15, die unabhängig von anderen Stromquellen aufgrund von Temperaturunterschieden an Referenzstellen genügend Energie erzeugt, um zumindest eine Steuer- und Regeleinheit 18 eines Thermostaten 13 zu betreiben um somit eine autonome Regelung eines dezentralen Heizkörpers 2 zu ermöglichen.

## Patentansprüche

1. Steuereinrichtung (10) für eine Heizungseinrichtung (1), mit einem eine Steuereinheit (18) aufweisenden Thermostaten (13) und einer Energiequelle, wobei die Steuereinheit (18) mit der Energiequelle verbunden ist, die zum Betreiben der Steuereinheit (18) dient,
wobei die Energiequelle als Energiequelle (15a) ausgebildet ist, die beim Vorhandensein von Temperaturdifferenzen zwischen zwei Referenzstellen (11, 12) Energie erzeugt,
**dadurch gekennzeichnet,**
**dass** die Energiequelle (15a) ein erstes Modul (30) aufweist, welches der Energiegewinnung bei niedrigen Temperaturdifferenzen dient, und dass die Energiequelle (15a) ein zweites Modul (31) aufweist, welches der Energiegewinnung bei großen Temperaturdifferenzen dient,
wobei die Energiequelle (15a) einen Energiezwischenspeicher (33) aufweist, wobei das erste Modul (30) und das zweite Modul (31) über eine Leitung (32) mit dem Energiezwischenspeicher (33) verbunden ist.

2. Steuereinrichtung nach Anspruch 1,
**dadurch gekennzeichnet,**
**dass** die Energiequelle (15; 15a) in dem Thermostaten (13) integral angeordnet ist.

3. Steuereinrichtung nach Anspruch 2,
**dadurch gekennzeichnet,**
**dass** die eine Referenzstelle (12) mit der Umgebungstemperatur und die andere Referenzstelle (11) mit einem Heizungsrohr zumindest mittelbar in Wirkverbindung angeordnet sind.

4. Steuereinrichtung nach einem der Ansprüche 1 bis 3,
**dadurch gekennzeichnet,**
**dass** die Steuereinheit (18) mit einer Ein-/Ausgabeeinheit (25) zur manuellen Eingabe und optischen Darstellung von Werten verbunden ist.

5. Steuereinrichtung nach einem der Ansprüche 1 bis 4,
**dadurch gekennzeichnet,**
**dass** die Steuereinheit (18) bidirektionale Datenübertragungsmittel (20, 21) zur Kommunikation mit zumindest einer zentralen Steuereinheit (23) aufweist.

6. Steuereinrichtung nach Anspruch 5,
**dadurch gekennzeichnet,**
**dass** die Datenübertragungsmittel (20, 21) drahtlos ausgebildet sind.

7. Steuereinrichtung nach einem der Ansprüche 1 bis 6,
**dadurch gekennzeichnet,**
**dass** der Thermostat (13) einen Normanschluss zur manuellen Verbindung mit der Heizungseinrichtung (1) durch einen Bediener aufweist.

8. Steuereinrichtung nach einem der Ansprüche 1 bis 7,
**dadurch gekennzeichnet,**
**dass** der Thermostat (13) einen Temperaturfühler (27) für die Umgebungstemperatur aufweist, der mit der Steuereinheit (18) verbunden ist.

9. System zur Steuerung einer Heizungseinrichtung (1) mit einer zentralen Steuereinheit (23) und wenigstens einer Steuereinrichtung (10) nach einem der Ansprüche 1 bis 8.

## Claims

1. Control device (10) for a heating device (1), comprising a thermostat (13) having a control unit (18) and comprising an energy source,
wherein the control unit (18) is connected to the energy source, which is used for operating the control unit (18),
wherein the energy source is formed as an energy source (15a) that generates energy in the presence of temperature differences between two reference points (11, 12),
**characterized**
**in that** the energy source (15a) has a first module (30), which serves for producing the energy when there are small temperature differences, and in that the energy source (15a) has a second module (31), which serves for producing the energy when there are great temperature differences,
wherein the energy source (15a) has an energy buffer store (33),
wherein the first module (30) and the second module (31) are connected to the energy buffer store (33) via a line (32).

2. Control device according to Claim 1,
**characterized**
**in that** the energy source (15; 15a) is integrally arranged in the thermostat (13).

3. Control device according to Claim 2, **characterized**
**in that** one reference point (12) is arranged at least indirectly in operative connection with the ambient temperature and the other reference point (11) is arranged at least indirectly in operative connection with a heating pipe.

4. Control device according to one of Claims 1 to 3, **characterized**
**in that** the control unit (18) is connected to an input/output unit (25) for the manual input and visual display of values.

5. Control device according to one of Claims 1 to 4, **characterized**
**in that** the control unit (18) has bidirectional data transmission means (20, 21) for communication with at least one central control unit (23).

6. Control device according to Claim 5, **characterized**
**in that** the data transmission means (20, 21) are wirelessly formed.

7. Control device according to one of Claims 1 to 6, **characterized**
**in that** the thermostat (13) has a standard connection for the heating device (1) to be manually connected by an operator.

8. Control device according to one of Claims 1 to 7, **characterized**
**in that** the thermostat (13) has a temperature sensor (27) for the ambient temperature, which is connected to the control unit (18).

9. System for controlling a heating device (1) comprising a central control unit (23) and at least one control device (10) according to one of Claims 1 to 8.

## Revendications

1. Dispositif de commande (10) pour un appareil de chauffage (1), doté d'un thermostat (13) présentant une unité de commande (18) et d'une source d'énergie, dans lequel l'unité de commande (18) est reliée à la source d'énergie, qui est utilisée pour le fonctionnement de l'unité de commande (18), dans lequel la source d'énergie est réalisée sous la forme d'une source d'énergie (15a), qui produit de l'énergie en présence d'une différence de température entre deux points de référence (11, 12),
**caractérisé en ce que** la source d'énergie (15a) présente un premier module (30), qui sert pour la production d'énergie lors de faibles différences de température, et **en ce que** la source d'énergie (15a) présente un deuxième module (31), qui sert pour la production d'énergie lors de fortes différences de température, dans lequel la source d'énergie (15a) présente un accumulateur d'énergie intermédiaire (33), dans lequel le premier module (30) et le deuxième module (31) sont reliés par une ligne (32) à l'accumulateur d'énergie intermédiaire (33).

2. Dispositif de commande selon la revendication 1, **caractérisé en ce que** la source d'énergie (15; 15a) est agencée intégralement dans le thermostat (13).

3. Dispositif de commande selon la revendication 2, **caractérisé en ce qu'**un premier point de référence (12) avec la température ambiante et l'autre point de référence (11) avec un tube de chauffage sont agencés au moins indirectement en liaison active.

4. Dispositif de commande selon l'une quelconque des revendications 1 à 3, **caractérisé en ce que** l'unité de commande (18) est reliée à une unité d'entrée/sortie (25) pour l'entrée manuelle et la représentation optique de valeurs.

5. Dispositif de commande selon l'une quelconque des revendications 1 à 4, **caractérisé en ce que** l'unité de commande (18) présente des moyens de transmission de données bidirectionnels (20, 21) pour la communication avec au moins une unité de commande centrale (23).

6. Dispositif de commande selon la revendication 5, **caractérisé en ce que** les moyens de transmission de données (20, 21) sont réalisés sans fil.

7. Dispositif de commande selon l'une quelconque des revendications 1 à 6, **caractérisé en ce que** le thermostat (13) présente un raccord normalisé pour la liaison manuelle avec l'appareil de chauffage (1) par un utilisateur.

8. Dispositif de commande selon l'une quelconque des revendications 1 à 7, **caractérisé en ce que** le thermostat (13) présente un capteur de température (27) pour la température ambiante, qui est relié à l'unité de commande (18).

9. Système pour commander un appareil de chauffage (1) avec une unité de commande centrale (23) et au moins un dispositif de commande (10) selon l'une quelconque des revendications 1 à 8.
